# EUROPEAN PATENT APPLICATION

(11) **EP 4 043 287 A1**
(43) Date of publication of application: **17.08.2022**
(21) Application number: 20873610.8
(22) Date of filing: 10.10.2020
(51) Int. Cl.: B60R 7/04

(54) **VEHICLE INTERIOR TRIM PART**

(30) Priority: 10.10.2019 CN 201910959785
(71) Applicant: Shanghai Yanfeng Jinqiao Automotive Trim Systems Co., Ltd., Shanghai 201206 (CN)
(72) Inventor: ZHANG, Jixiang, Shanghai 201206 (CN); MA, Yanhua, Shanghai 201206 (CN); LIN, Meisui, Shanghai 201206 (CN); YANG, Zhen, Shanghai 201206 (CN)
(74) Representative: Trinks, Ole
(86) International application number: PCT/CN2020/120211
(87) International publication number: WO 2021/068941

(57) **Abstract**

Provided is a vehicle interior trim component comprising a base (10) having a storage compartment (H) and a cover (20), wherein the cover (20) is configured to be movable, relative to the base (10), between a first closed position where the storage compartment (H) is covered and a first open position where the storage compartment (H) is exposed in both an electric mode and a manual mode. The interior trim can avoid failure under any condition, has a simple structure and good practicability, and can be widely applied to intelligent interior trim involving both electric operation and manual operation.

## Description

### FIELD OF THE INVENTION

The present invention relates to a vehicle interior trim component and, in particular, to an interior trim component for use in an electric mode and a manual mode.

### BACKGROUND

At present, vehicle interiors are developing toward electrification, intellectualization and networking, and electric and intelligent interior trim components can provide passengers with comfortable driving experiences with a sense of ritual, having a bright development prospect. However, for manually opened interior trim components cannot bring good passenger experiences, and pure electric interior trim components cannot be manually opened when the motor fails, falling into failure state. In addition, clutch mechanism for the interior trim components in the prior art realizes the clutch of two objects through friction force or a driving system, but only at limited positions, and has a complex structure and occupies too much space.

### SUMMARY

The present invention provides a vehicle interior trim component, which solves the problem that the interior trim component cannot be used in both manual and electric modes simultaneously in the prior art, and further solves the problems that a clutch mechanism used in the interior trim component can only realize the clutch of two objects at limited positions, and has a complex structure and occupies too much space.

The present invention provides a vehicle interior trim component comprising a base having a storage compartment and a cover, wherein the cover is configured to be movable, relative to the base, between a first closed position where the storage compartment is covered and a first open position where the storage compartment is exposed in both an electric mode and a manual mode.

The interior trim component comprises a slide driven by a motor and moving, relative to the base, between the first closed position and the first open position.

The cover is configured to move in the electric mode when the cover is connected with the slide, and the cover is configured to move in the manual mode when the cover is disconnected from the slide.

The interior trim component comprises a clutch lock for realizing the connection and disconnection of the cover with the slide.

The cover is provided with a switch, and the clutch lock is configured to realize the connection or disconnection of the cover with the slide in response to pressure applied to the switch.

The slide comprises a locking slot, and the cover comprises an unlocking slot; the cover is connected with the slide when a locking head of the clutch lock is positioned in the locking slot, and the cover is disconnected from the slide when the locking head of the clutch lock is positioned in the unlocking slot.

The clutch lock is disposed on the cover and rotated relative to the cover, such that the clutch lock moves from the locking slot into the unlocking slot or from the unlocking slot into the locking slot.

The clutch lock is connected with the cover by a first tension spring that acts on the clutch lock to retain the locking head of the clutch lock in the locking slot.

The locking slot is aligned with the unlocking slot when the cover and the slide are in a same position.

The interior trim component comprises a cover lock, wherein the cover is connected with the cover lock when the slide moves away from the first closed position such that the cover is secured in the first closed position.

The cover lock is configured to rotate in response to the pressure applied to the switch when the cover is connected with the cover lock such that the cover lock is disconnected from the cover.

The cover lock is configured to connect with the cover when the slide is in the first closed position.

The cover lock is connected with the base by a second tension spring.

The base is provided with a stop rod, and the stop rod is configured to define a position of the cover lock under the action of the second tension spring when the slide moves away from the cover lock.

Both ends of the slide are connected with a cable wrapping around a winder.

The winder is connected with the motor to move the slide.

The interior trim component comprises a movable storage box connected with the motor, wherein movement of the storage box rotates the winder and thereby moves the slide.

The present invention provides a vehicle interior trim component comprising a base having a storage compartment, a cover and a movable storage box, wherein the cover is configured to be movable, relative to the base, between a first closed position where the storage compartment is covered and a first open position where the storage compartment is exposed in both an electric mode and a manual mode, and the movable storage box is configured to move between a second closed position within the base and a second open position where the movable storage box protrudes from the base.

The movable storage box is powered by a motor.

The cover is secured to the base by a cover lock when the cover is in the first closed position.

The cover is released from the base when the movable storage box moves to the second open position.

The movable storage box comprises a push rod, and the push rod contacts and pushes the cover lock to rotate when the movable storage box moves toward the second open position.

The interior trim component comprises a clutch lock provided on the cover, wherein the rotation of the clutch lock rotates the cover lock when the cover is in the first closed position to release the cover from the base.

The cover is provided with a switch, wherein the clutch lock is configured to rotate in response to pressure applied to the switch to release the cover from the base.

The cover moves from the first closed position toward the first open position in response to movement of the movable storage box from the second closed position toward the second open position.

The cover moves from the first open position toward the first closed position in response to movement of the movable storage box from the second open position toward the second closed position.

The cover is movable between the first closed position and a first open position when the movable storage box is in any position between the second closed position and the second open position.

The cover remains in the first open position when the movable storage box moves from the second open position toward the second closed position.

The present invention provides a vehicle interior component comprising: a base configured to provide a storage compartment; a cover configured to move, relative to the base, between a first closed position where the storage compartment is covered and a first open position where an access to the storage compartment is provided; and a mechanism configured to drive the cover to move between the first closed position and the first open position; wherein the cover is configured for an engaged state in which the cover is engaged with the mechanism and a disengaged state in which the cover is disengaged from the mechanism.

The mechanism comprises a motor configured to move the cover between a first closed position and a first open position when the cover is in the engaged state.

The vehicle interior component further comprises a connector configured to connect the cover to the mechanism to provide the engaged state.

The connector comprises a slide.

The mechanism is configured to move the connector to move the cover between the first closed position and the first open position.

The vehicle interior component further comprises an electrical cable configured to connect the connector with the mechanism and a clutch lock configured to disconnect the cover from the mechanism to provide the disengaged state.

The cover is configured to move between the first closed position and the first open position in response to an external force applied to the cover when the cover is in the disengaged state.

The external force comprises at least one of a force applied to the cover by a hand and a force applied to the cover by a torsion spring.

The vehicle interior component further comprises a storage box configured to move, relative to the base, between a second closed position where the storage box is stored and a second open position where an access to the storage box is provided.

The cover is configured to move from the first closed position toward the first open position when the storage box moves from the second closed position toward the second open position.

The cover is configured to move from the first open position toward the first closed position when the storage box moves from the second open position toward the second closed position.

The cover is configured to move from the first closed position toward the first open position or from the first open position toward the first closed position when the storage box is in the second closed position.

The present invention is provided with the clutch lock and the cover lock that interact in an electric state and a manual state, realizing the opening and closing of the interior trim component in the manual state and the electric state. The present invention avoids the failure of the interior trim component under any condition, has a simple structure and good practicability, and can be widely applied to intelligent interior trim component involving both electric operation and manual operation.

### BRIEF DESCRIPTION OF DRAWINGS

FIGURE 1A is a schematic perspective view of a vehicle according to an exemplary embodiment.
FIGURE 1B is an interior schematic perspective view of a vehicle according to an exemplary embodiment.
FIGURES 2A-2E are schematic views illustrating a process where a cover of a vehicle interior trim component according to Embodiment 1 of the present invention moves from a first closed position to a first open position and then returns to the first closed position in an electric mode.
FIGURES 3A-3F are schematic views illustrating a process where a cover of the vehicle interior trim component according to Embodiment 1 of the present invention moves from a first closed position to a first open position and then returns to the first closed position in a manual mode.
FIGURES 4A-4J are schematic views illustrating a process where a cover of the vehicle interior trim component according to Embodiment 1 of the present invention moves from a first closed position to a first open position in an electric mode, then returns from the first open position to the first closed position and moves to the first open position again in a manual mode.
FIGURES 5A-5I are schematic views illustrating a process where a cover of the vehicle interior trim component according to Embodiment 1 of the present invention moves from a first closed position to a first open position in an electric mode, then returns from the first open position to the first closed position in a manual mode, and then moves from the first closed position to the first open position again in the electric mode.
FIGURE 6A is an assembly schematic view of the interior structure of the vehicle interior trim component according to Embodiment 1 of the present invention.
FIGURE 6B is an exploded schematic view of the interior structure of the vehicle interior trim component according to Embodiment 1 of the present invention.
FIGURE 7 is a schematic view of the structure of a cover of the vehicle interior trim component according to Embodiment 1 of the present invention.
FIGURE 8 is a schematic view of the structure of a slide of the vehicle interior trim component according to Embodiment 1 of the present invention.
FIGURE 9 is a schematic view of the structure of a clutch lock of the vehicle interior trim component according to Embodiment 1 of the present invention.
FIGURE 10 is a schematic view of the structure of a cover lock of the vehicle interior trim component according to Embodiment 1 of the present invention.
FIGURE 11 is a schematic view of the structure of a power-assisted gear set of the vehicle interior trim component according to Embodiment 1 of the present invention.
FIGURE 12A is a schematic view of some components of the vehicle interior trim component according to Embodiment 1 of the present invention in a position where the cover is in a first closed position.
FIGURE 12B is a schematic view of some components of the vehicle interior trim component according to Embodiment 1 of the present invention in a position where the cover is in a first open position.
FIGURES 13A-13E are schematic views showing the internal structure of the vehicle interior trim component in FIGURES 2A-2E during movement with a spring and a clutch lock hidden.
FIGURES 14A-14E are schematic views showing the internal structure of the vehicle interior trim component in FIGURES 2A-2E during movement with a spring hidden.
FIGURES 15A-15H are schematic views showing the internal structure of the vehicle interior trim component in FIGURES 3A-3F during movement with a spring hidden.
FIGURES 16A-16E are schematic views showing the internal structure of the vehicle interior trim component in FIGURES 4C-4G during movement with a spring hidden.
FIGURES 17A-17E are schematic views showing the internal structure of the vehicle interior trim component in FIGURES 4G-4J during movement with a spring hidden.
FIGURES 18A-18E are schematic views showing the internal structure of the vehicle interior trim component in FIGURES 5F-5I during movement with a spring hidden.
FIGURES 19A-19C are schematic views showing the positions of components of the vehicle interior trim component according to Embodiment 1 of the present invention during a process of driving a slide back to a first open position in an electric mode when the slide is in a first closed position and a cover is in the first open position with a spring hidden.
FIGURE 20A is a schematic view of a position relationship between a cover lock and a slide of the vehicle interior trim component according to Embodiment 1 of the present invention when a cover is in a first closed position.
FIGURE 20B is a schematic view of a corresponding position relationship between a locking slot and an unlocking slot of the vehicle interior trim component according to Embodiment 1 of the present invention when a cover is in a first closed position.
FIGURE 21A is a schematic view of the structure of the vehicle interior trim component according to Embodiment 1 of the present invention when a cover is in a first open position and a slide in a first closed position with a spring remained.
FIGURE 21B is a schematic view of the structure of the vehicle interior trim component according to Embodiment 1 of the present invention when a cover is in a first closed position and a slide in a first open position with a spring remained.
FIGURES 22A-22E are schematic views illustrating a process where a cover moves from a first closed position to a first open position, and then returns to the first closed position, and meanwhile a movable storage box moves from a second closed position to a second open position, and then returns to the second closed position, according to a vehicle interior trim component in Embodiment 2 of the present invention in an electric mode.
FIGURES 23A-23G are schematic views illustrating a process where a cover moves from a first closed position to a first open position, and meanwhile a movable storage box moves from a second closed position to a second open position in an electric mode; then the cover is manually pulled back to the first closed position after a switch B is manually pressed in a manual mode, while the movable storage box remains in the second open position, according to the vehicle interior trim component in Embodiment 2 of the present invention.
FIGURE 24A is an exploded schematic view of the internal structure of the vehicle interior trim component according to Embodiment 2 of the present invention.
FIGURE 24B is an assembly schematic view of the internal structure of the vehicle interior trim component according to Embodiment 2 of the present invention.
FIGURES 25A-25E are schematic views of the internal structure of the vehicle interior trim component in FIGURES 22A-22E during movement with a spring hidden.
FIGURES 26A-26H are schematic views illustrating a process where a cover does not move from a first closed position toward, and finally to, a first open position until a movable storage box moves from a second closed position to a second open position in an electric mode; the movable storage box moves from the second open position back to the second closed position in the electric mode, and the cover is manually pulled from the first open position back to the first closed position, according to a vehicle interior trim component in Embodiment 3 of the present invention.
FIGURE 27A is an assembly schematic view of the internal structure of the vehicle interior trim component according to Embodiment 3 of the present invention.
FIGURE 27B is an exploded schematic view of the internal structure of the vehicle interior trim component according to Embodiment 3 of the present invention.
FIGURES 28A-28D are schematic views illustrating a process where a cover is moved from a first closed position to a first open position by manually pressing a switch B in a manual mode, while the movable storage box remains in a second closed position, according to the vehicle interior trim component in Embodiment 3 of the present invention.
FIGURES 29A-29D are schematic views illustrating a process of manually pulling a cover of the vehicle interior trim component according to Embodiment 3 of the present invention from a first open position back to a first closed position.
FIGURES 30A-30F are schematic views of the internal structure of the vehicle interior trim component in FIGURES 26A-26D during movement with a partially enlarged view of the unlocked cover shown.

### DETAILED DESCRIPTION

The present invention is further described below with reference to the following drawings and embodiments, and it should be understood that the following embodiments are illustrative only and not limiting the present invention.

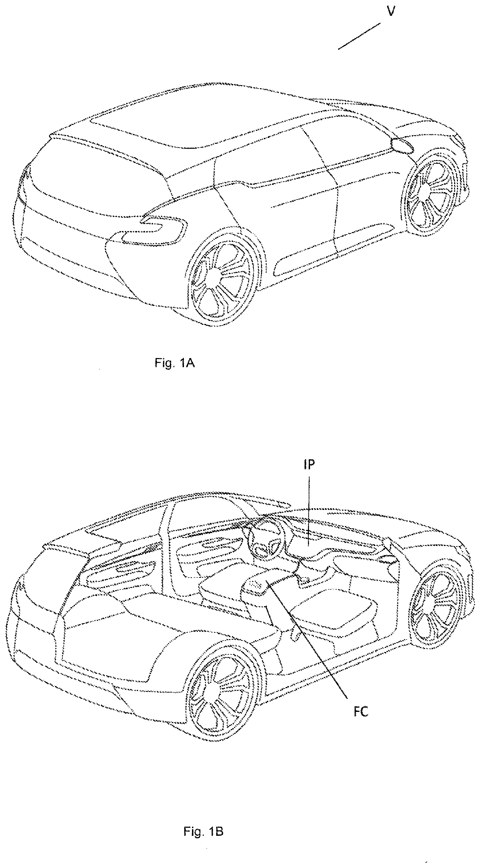

According to an exemplary embodiment as schematically showed in FIGURES 1A-1B, a vehicle (V) may be provided with an interior component I including vehicle interior components such as an instrument panel (IP) and a floor console (FC) with a vehicle interior trim component of the present invention.

### Embodiment 1

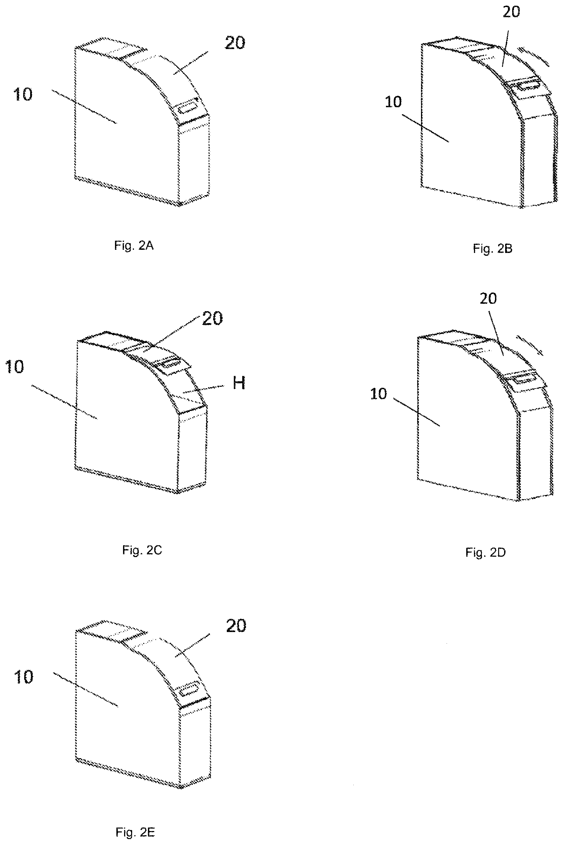

A vehicle interior trim component (shown as a floor console (FC)) provided by the present invention may comprise a base 10, the base 10 comprises a storage compartment H, a cover 20 that is movable relative to the base 10 is provided at an opening of the storage compartment H, and the cover 20 is provided with a manual switch B and moved, by a driving mechanism, between a first closed position (shown in FIGURE 2A) where the storage compartment H is covered and a first open position (shown in FIGURE 2C) where the storage compartment H is completely exposed.

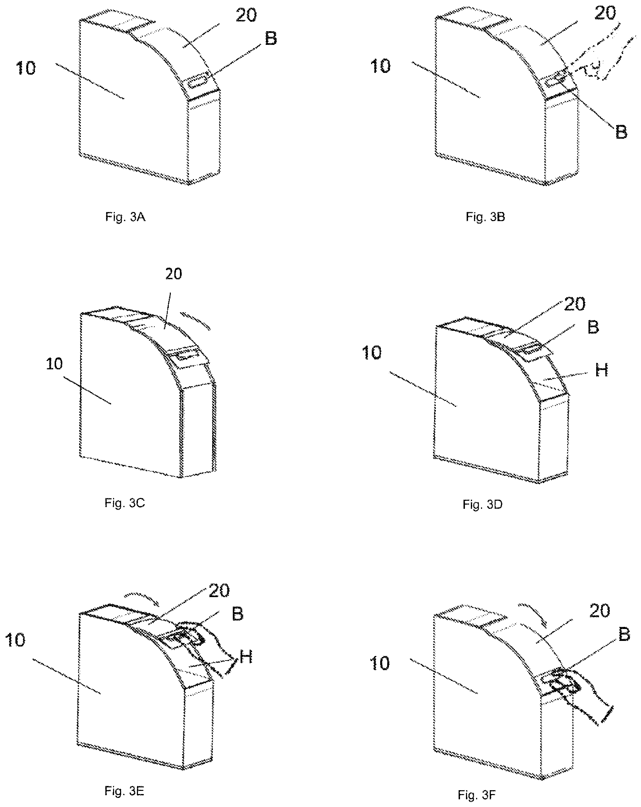

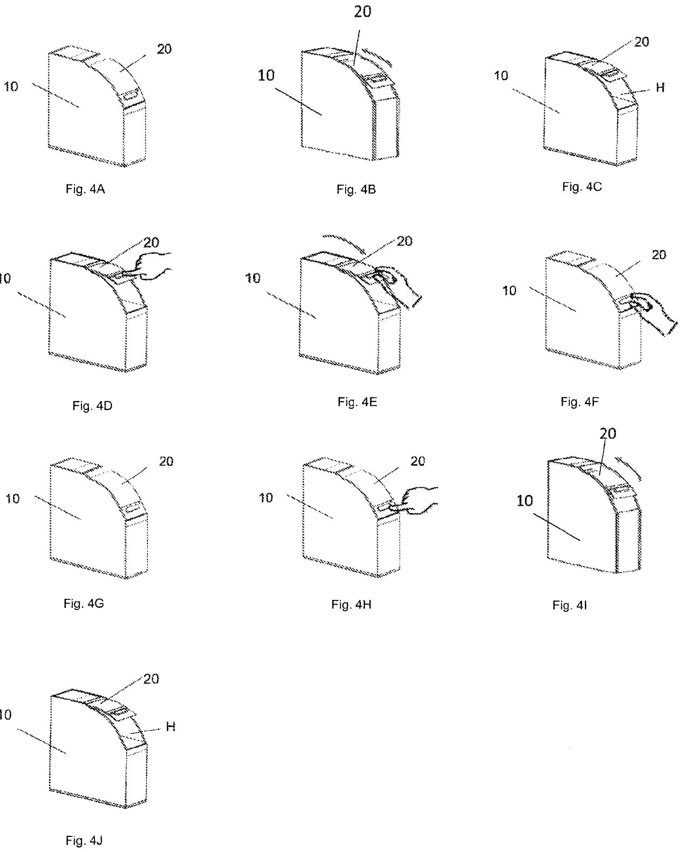

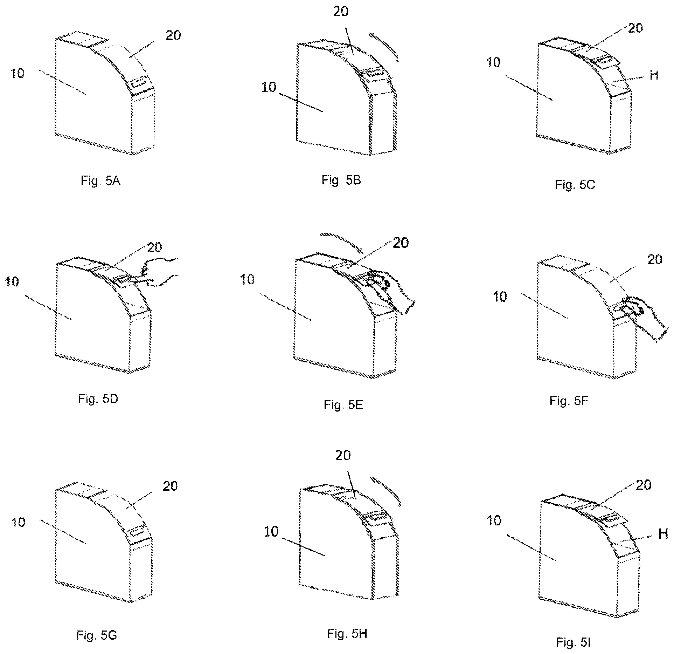

In particular, the cover 20 moves from the first closed position to the first open position and then from the first open position back to the first closed position in an electric mode, as schematically shown in the exemplary embodiment in FIGURES 2A-2E. Alternatively, the cover 20 moves from the first closed position, by manually pressing a switch B, to the first open position via an intermediate position, and then back to the first closed position by manually pulling the cover 20 in a manual mode, as schematically shown in the exemplary embodiment in FIGURES 3A-3F. In addition, the electric mode and the manual mode can be switched to at any time without affecting the opening and closing of the cover 20. In particular, after the cover 20 moves from the first closed position to the first open position via the intermediate position in the electric mode, the vehicle interior trim component is switched to the manual mode; the cover 20 can be locked by pulling the cover 20 back to the first closed position after the switch B is manually pressed, and can also be unlocked by pressing the switch B again, so that the cover 20 can be moved from the first closed position to the first open position, as schematically shown in the exemplary embodiment in FIGURES 4A-4J. Alternatively, after the cover 20 moves from the first closed position to the first open position via the intermediate position in the electric mode, the vehicle interior trim component is switched to the manual mode; the cover 20 is locked by pulling the cover 20 back to the first closed position after the switch B is manually pressed, and then the cover 20 moves from the first closed position to the first open position again in the electric mode, as schematically shown in the exemplary embodiment in FIGURES 5A-5I.

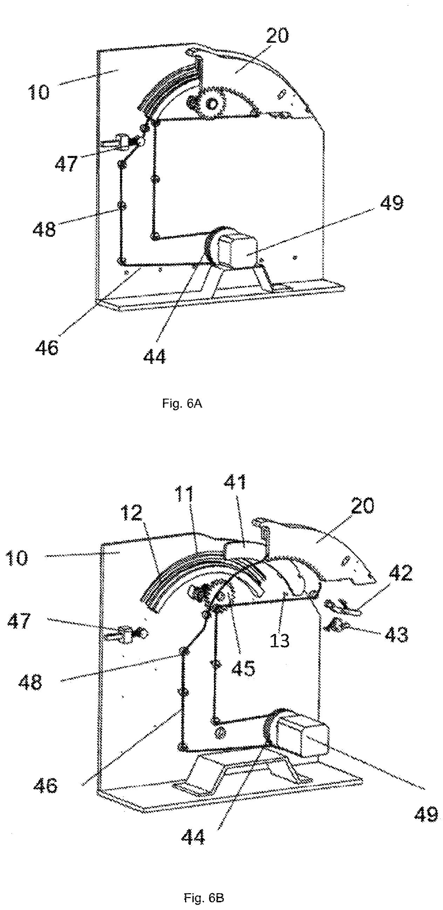

As shown in FIGURES 6A-6B, a first sliding rail 11 and a second sliding rail 12 are mounted in parallel on an inner side of the base 10, and the cover 20 may slide along the first sliding rail 11. The first sliding rail 11 and the second sliding rail 12 can have a linear or curved shape, or other shapes according to actual needs.

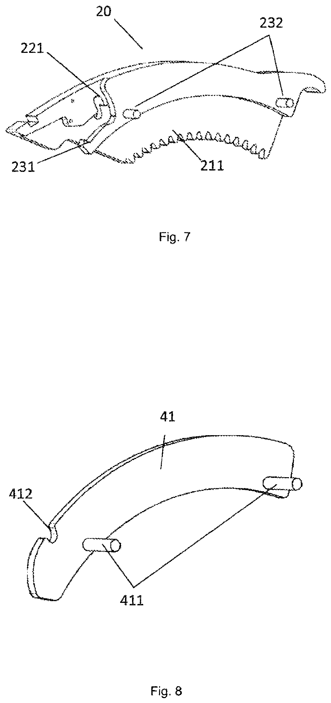

As shown in FIGURE 7, the cover 20 comprises a first sidewall 21, a second sidewall 22 and a third sidewall 23 extending substantially in a vertical direction, and the first sidewall 21, the second sidewall 22 and the third sidewall 23 are substantially parallel. The bottom surface of the first side wall 21 is provided with teeth 211, the bottom surface of the second side wall 22 is provided with an unlocking slot 221, and the third side wall 23 has a locking tongue 231 protruding along its extending direction and is provided with a guide post 232 on its side surface. The guide posts 232 are mounted on the first sliding rail 11 of the base 10, so that the cover 20 can slide along the first sliding rail 11.

Referring to FIGURES 6A-6B, the driving mechanism comprises a slide 41 adjacent to the cover 20 and moving relative to the base 10, a clutch lock 42 for controlling the connection and disconnection of the cover 20 and the slide 41, a cover lock 43 for securing the cover 20 to the base 10, a winder 44 mounted inside the base 10, a power-assisted gear set 45 engaged with teeth 211 on the cover 20, and a cable 46 connected with both ends of the slide 41.

As shown in FIGURES 6B and 8, the slide 41 is provided with a locking slot 412 on the top surface and a guide post 411 on the side surface, and the guide post 411 is mounted on the second sliding rail 12 of the base 10, so that the slide 41 can slide along the second sliding rail 12. The cable 46 is connected with both ends of the slide 41 and wraps around the winder 44. The winder 44 is driven by a motor 49 to move the cable 46, so that the slide 41 can reciprocate along the second rail 12. In present embodiment, the base 10 is mounted with a tension pulley 47 and a multi-alignment cable pulley 48 to provide pre-tension to the cable 46, and the cable 46 wraps around the tension pulley 47 and the cable pulley 48, such that the cable has a more stable movement and a more flexible arrangement. A cable slot structure 15 is provided in parallel with the first sliding rail 11 and the second sliding rail 12 to support and guide cables.

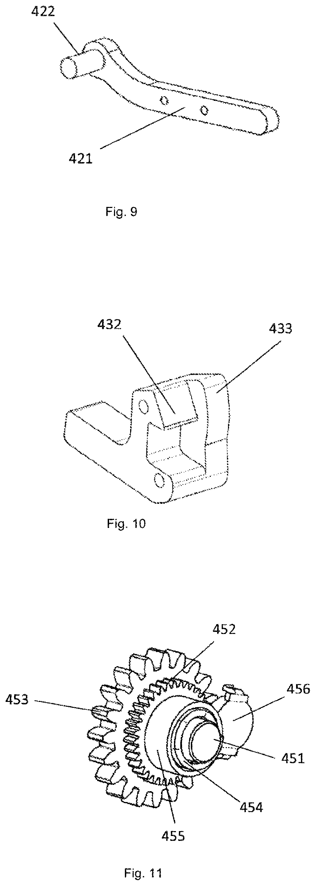

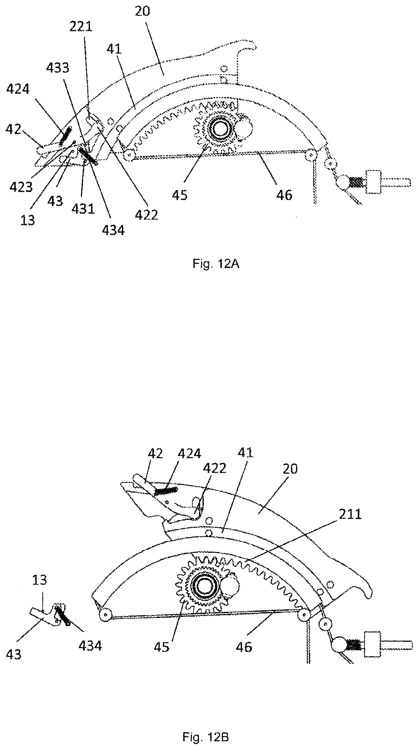

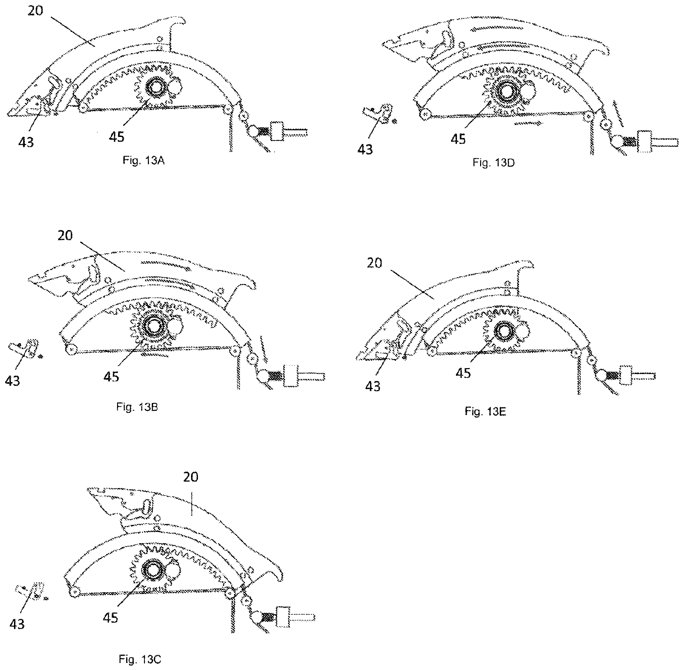

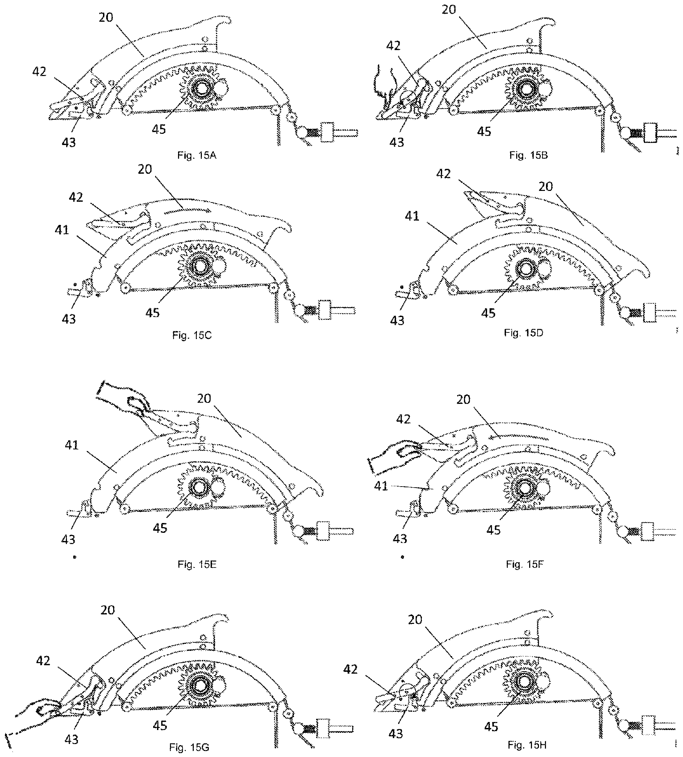

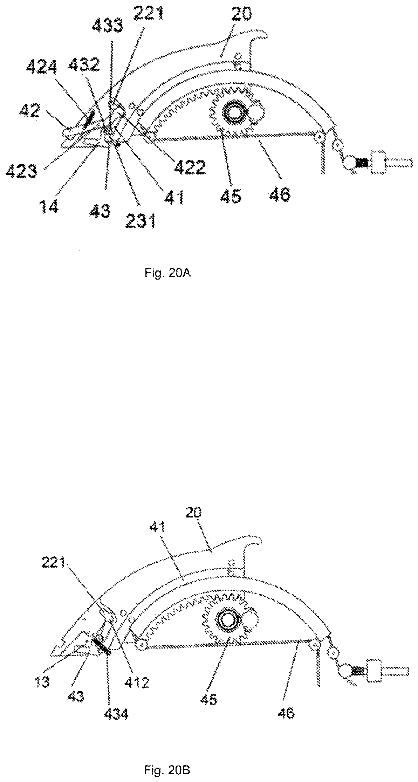

As shown in FIGURES 9 and 12A, the clutch lock 42 comprises a lock rod 421 and a locking head 422 fixed to an end of the lock rod 421. The clutch lock 42 is pivotally connected to the cover 20 by a first rotating shaft 423. A first tension spring 424 has one end fixed to the lock rod 421 and the other end fixed to the cover 20. As shown in FIGURES 13A and 20B, the unlocking slot 221 on the cover 20 is aligned with the locking slot 412 on the slide 41 when the cover 20 and the slide 41 are in the first closed position. Also, as shown in FIGURES 13B-13E, the unlocking slot 221 is aligned with the locking slot 412 when the cover 20 and the slide 41 are moved synchronously to other same positions. As shown in FIGURE 20A, the first tension spring 424 applies a tensile force to the lock rod 421 to rotate the lock rod clockwise around the first rotating shaft 423, and drives the locking head 422 to be inserted into the locking slot 412 of the slide 41, so that the clutch lock 42 can keep moving synchronously with the slide 41. The other end of the lock rod 421 is connected with a manual switch B (not shown), as shown in FIGURE 15B, when the manual switch B is pressed, an external force is applied to the lock rod 421 to counteract the tensile force of the first tension spring 424, such that the lock rod 421 rotates counterclockwise around the first rotating shaft 423 and drives the locking head 422 to be inserted into the unlocking slot 221 of the cover 20.

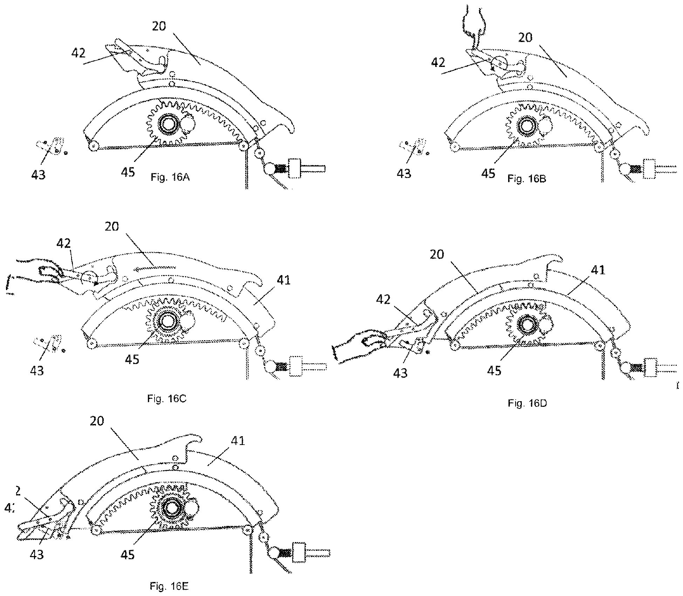

As shown in FIGURES 10 and 12A, the cover lock 43 comprises a locking hook 432 and an eccentric structure 433 adjacent to the locking hook 432, and is pivotally connected to the base 10 by a second rotating shaft 431. A second tension spring 434 has one end fixed to the locking hook 432 and the other end fixed to the base 10. As shown in FIGURE 16E, when the cover 20 is in the closed state, the second tension spring 434 applies a tensile force to the cover lock 43 to rotate the cover lock clockwise about the second rotating shaft 431, such that the locking hook 432 is hooked with the locking tongue 231 on the cover 20, thereby securing the cover 20 to the base 10. The center of the curvature of any position of the curved surface of the eccentric structure 433 and the center of the rotation of the cover lock 43 are located on the same side. As shown in FIGURE 13A, FIGURES 14A and 15A, the slide 41 pushes the cover lock 43 to rotate counterclockwise around the second rotating shaft 431 when the eccentric structure 433 contacts with the slide 41, such that the locking hook 432 is disengaged from the locking tongue 231. As shown in FIGURE 6B and FIGURE 12B, in the present embodiment, a stop rod 13 for limiting the cover lock 43 is further provided on the base 10, for limiting the position of the cover lock 43 after being rotated clockwise under the action of the second tension spring 434 after the locking hook 432 is disengaged from the locking tongue 231.

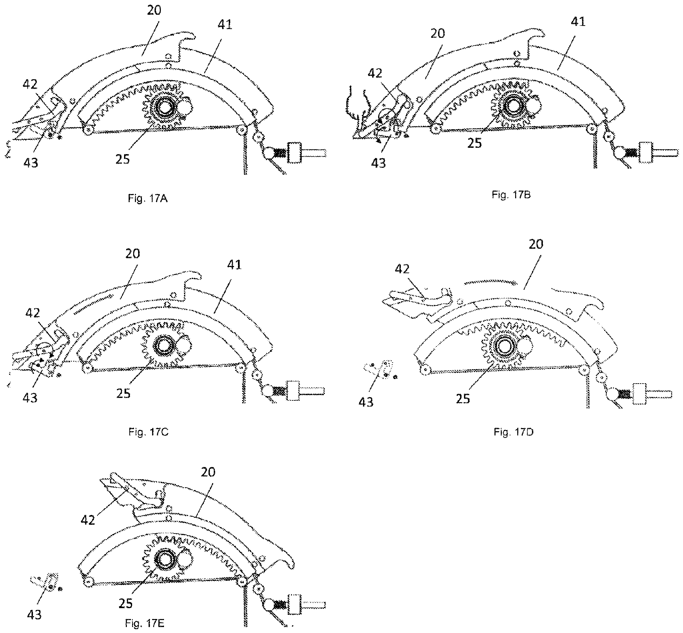

As shown in FIGURES 11 and 12A, the power-assisted gear set 45 comprises a fixed shaft 451, and an inner gear 452, an outer gear 453, a torsion spring 454, and a bearing 455 that are coaxially arranged on the fixed shaft 451. The torsion spring 454 is sleeved on the fixed shaft 451 and located inside the outer gear 453, so as to accumulate force to boost the opening of cover 20, as shown in FIGURES 15C and 17C-17D. The power-assisted gear set 45 is mounted on the base 10 by the fixed shaft 451, and the outer gear 453 is engaged with the teeth 211 of the cover 20. The power-assisted gear set 45 further comprises a damper 456 engaged with the inner gear 452, and transmits a damping force to the outer gear 453 through a transmission action of the inner gear 452, so that the cover 20 can be smoothly opened and closed.

The following describes the movement process of the vehicle interior trim component according to the present embodiment with reference to the drawings.

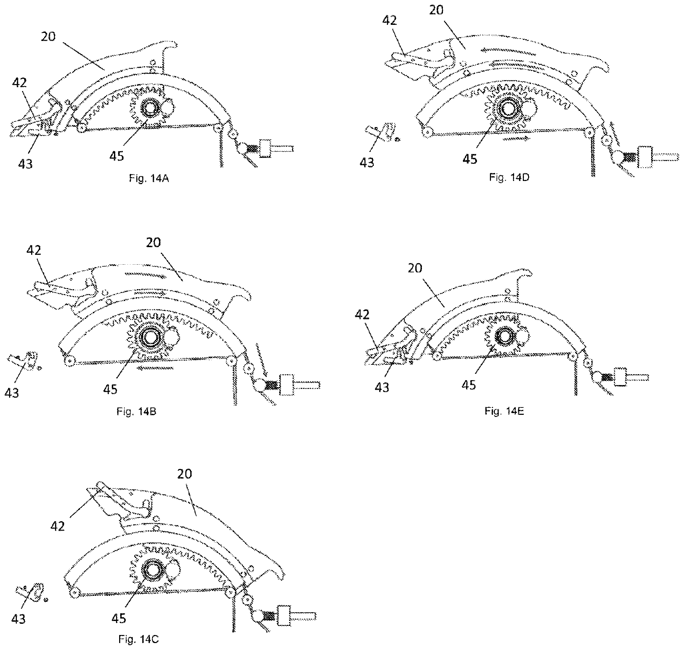

When the cover 20 is in the first closed position, the tensile force applied by the second tension spring 434 to the cover lock 43 is overcome due to the slide 41 abutting against the eccentric structure 433 of the cover lock 43, such that the locking hook 432 on the cover lock 43 is kept disconnected from the locking tongue 231 on the cover 20, as shown in FIGURE 13A; meanwhile, the unlocking slot 221 of the cover 20 is aligned with the locking slot 412 of the slide 41; the tensile force applied by the first tension spring 424 to the lock rod 421 enables the locking head 422 to rotate clockwise around the first rotating shaft 423 and to be inserted into the locking slot 412 of the slide 41, as shown in FIGURE 14A, thereby ensuring the synchronous movement of the cover 20 a nd the slide 41.

As shown in FIGURES 13A-13C and 14A-14C, the motor 49 drives the winder 44 to rotate when the cover 20 moves from the first closed position to the first open position in the electric mode, thereby driving the cable 46 to pull the slide 41 to move toward the first open position. The cover 20 is connected with the slide 41 by the clutch lock 42 and moves synchronously with the slide 41, and the force applied to the cover lock 43 by the slide 41 against the second tension spring 434 gradually disappears as the slide 41 gradually moves away from the cover lock 43; finally, the cover lock 43 rotates clockwise under the tensile force of the second tension spring 434 until the cover lock stops against the stop rod 13 on the base 10. The cover 20 can move smoothly from the first closed position to the first open position due to the engagement of the teeth 211 on the cover 20 and the external gear 453 of the power-assisted gear set 45.

As shown in FIGURES 13C-13E and 14C-14E, the motor 49 drives the winder 44 to rotate reversely when the cover 20 moves from the first open position to the first closed position in the electric mode, which in turn drives the cable 46 to pull the slide 41 to move reversely. Since the cover 20 and the slide 41 are always connected and kept in synchronous movement under the action of the clutch lock 42, the slide 41 drives the cover 20 to return to the first closed position, and meanwhile, the slide 41 contacts the eccentric structure 433 of the cover lock 43 and pushes the cover lock 43 to rotate counterclockwise to return to the first closed position.

In addition, the vehicle interior trim component provided herein can also be opened and closed manually when the electric mode fails or the vehicle interior trim component does not normally work, as the following examples described.

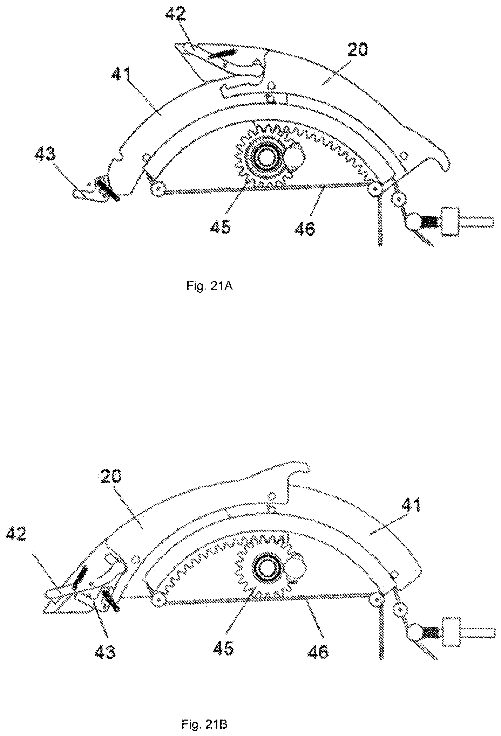

As shown in FIGURES 15A-15D, when the cover 20 and the slide 41 are in the first closed position and the motor 49 fails, if passengers want to open the cover, they can press the manual switch B on the cover 20, such that an external force is applied to the clutch lock 42 to overcome the tensile force of the first tension spring 424, thereby triggering the clutch lock 42 to rotate counterclockwise, such that the locking head 422 of the clutch lock 42 is disconnected from the locking slot 412 of the slide 41 and enters the unlocking slot 221 aligned with the locking slot 412, that is, the cover 20 is disconnected from the slide 41, as shown in FIGURE 15B. The cover 20 can move smoothly under the action of the power-assisted gear set 45, and the locking head 422 of the clutch lock 42 moves along with the movement of the cover 20 and abuts against the upper surface of the slide 41 until the cover 20 moves to the first open position while the slide 41 remains in the first closed position, as shown in FIGURE 21A.

On the contrary, as shown in FIGURES 15E-15H, if the passengers want to close the cover, they can directly pull the cover 20 manually, such that the locking head 422 of the clutch lock 42 moves against the upper surface of the slide 41 until the locking head 422 moves to the position of the locking slot 412, and falls into the locking slot 412 of the slide 41 again under the action of the first tension spring 424, that is, the cover 20 is reconnected with the slide 41, and at this time, the cover 20 returns to the first closed position.

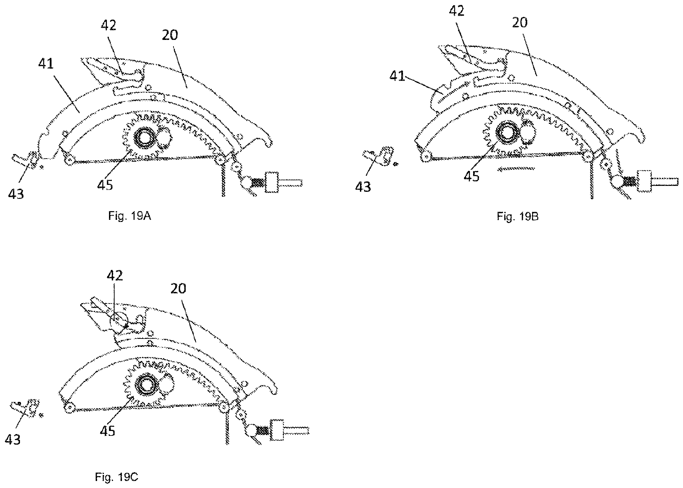

Alternatively, as shown in FIGURES 19A-19C, when the cover 20 has moved to the first open position and the slide 41 remains in the first closed position, the motor 49 resumes operating and thus drives the slide 41 to move toward the first open position; as the slide 41 moves, the locking head 422 of the clutch lock 42 moves against the upper surface of the slide 41 until the locking head 422 is aligned with the locking slot 412 of the slide 41 again, and the locking head 422 falls into the locking slot 412 of the slide 41 again under the action of the first tension spring 424, that is, the cover 20 is reconnected with the slide 41, and the slide 41 moves to the first closed position.

As shown in FIGURES 16A-16E, when the cover 20 and the slide 41 are in the first open position, the cover lock 43 has stopped after rotating clockwise to the stop rod 13 on the base 10 under the tensile force of the second tension spring 434. If the motor 49 fails at this time and passengers want to close the cover, they can press the manual switch B on the cover 20, such that an external force is applied to the clutch lock 42 to overcome the tensile force of the first tension spring 424, thereby triggering the clutch lock 42 to rotate counterclockwise, such that the locking head 422 of the clutch lock 42 is disconnected from the locking slot 412 of the slide 41 and enters the unlocking slot 221 aligned with the locking slot 412, that is, the cover 20 is disconnected from the slide 41. At this time, the cover 20 may be manually pulled to move to the first closed position until the locking tongue 231 of the cover 20 and the locking hook 432 of the cover lock 43 are hooked to each other to lock the cover 20, and the slide 41 still remains in the first open position, as shown in FIGURES 21B and 16E.

On the contrary, as shown in FIGURES 17A-17E, if the passengers want to open the cover 20, they press the manual switch B again, such that the clutch lock 42 rotates counterclockwise and pushes the cover lock 43 to rotate counterclockwise, and the locking hook 432 of the cover lock 43 is disengaged from the locking tongue 231 of the cover 20. The cover 20 is unlocked and smoothly opened under the action of the power-assisted gear set 45, and the locking head 422 of the clutch lock 42 is inserted into the locking slot 412 of the slide 41 again when the cover 20 moves to the first open position, such that the cover 20 is connected to the slide 41 again.

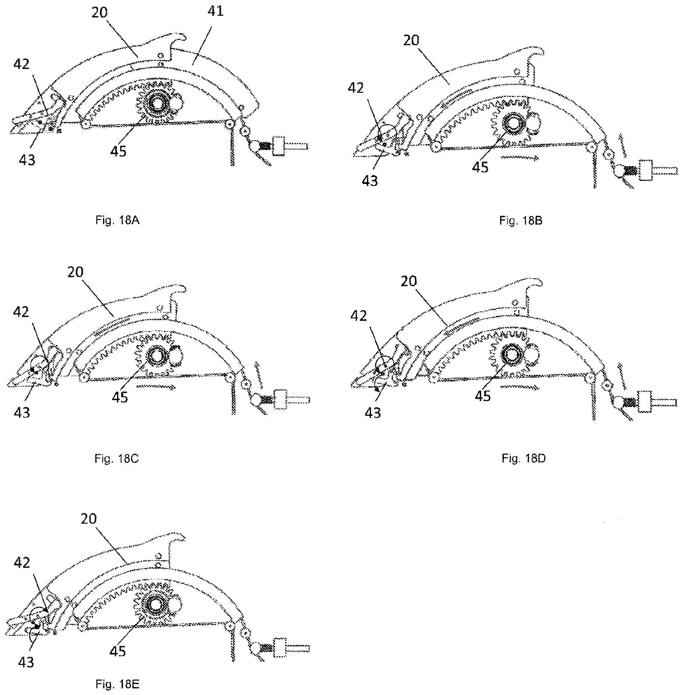

Alternatively, as shown in FIGURES 18A-18E, when the cover 20 returns to the first closed position and is locked with the cover lock 43 while the slide 41 remains in the first open position, if the motor 49 resumes operating again, the motor 49 drives the slide 41 to move toward the first closed position until a front end of the slide 41 contacts the eccentric structure 433 of the cover lock 43 and pushes the cover lock 43 to disconnect from the locking tongue 231 of the cover 20. At the same time, the locking head 422 of the clutch lock 42 slides into the locking slot 412 on the slide 41, such that the cover 20 is changed from being locked with the cover lock 43 to being locked with the slide 41, thus ensuring the stability of the cover 20.

### Embodiment 2

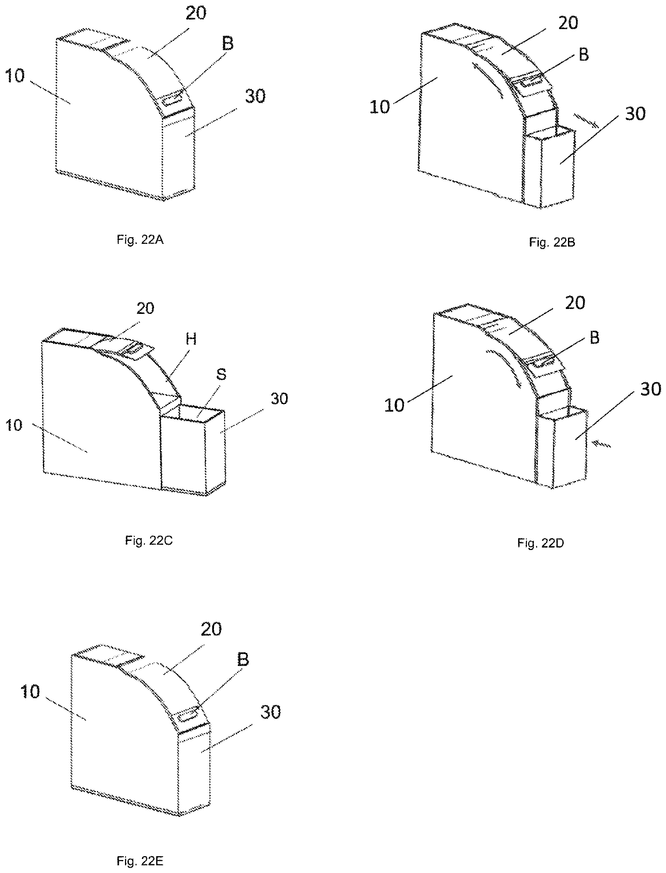

The present invention provides a vehicle interior trim component with the addition of a movable storage box 30 moving between a second closed position and a second open position relative to a base 10 on the basis of the structure in Embodiment 1, wherein the movable storage box 30 comprises a storage compartment S. As shown in FIGURE 22A, the movable storage box 30 is located inside the base 10 when it is in the second closed position, and the storage compartment S is invisible; as shown in FIGURE 22C, when the movable storage box 30 protrudes from the base 10 when it is in the second open position, and the storage compartment S is visible.

As shown in FIGURES 22A-22E, as the movable storage box 30 moves from the second closed position toward the second open position in the electric mode, the cover 20 also moves from the first closed position toward the first open position simultaneously until the movable storage box 30 moves to the second open position and the cover 20 moves to the first open position; conversely, as the movable storage box 30 moves from the second open position toward the second closed position, the cover 20 also moves from the first open position toward the first closed position simultaneously until the movable storage box 30 returns to the second closed position and the cover 20 returns to the first closed position.

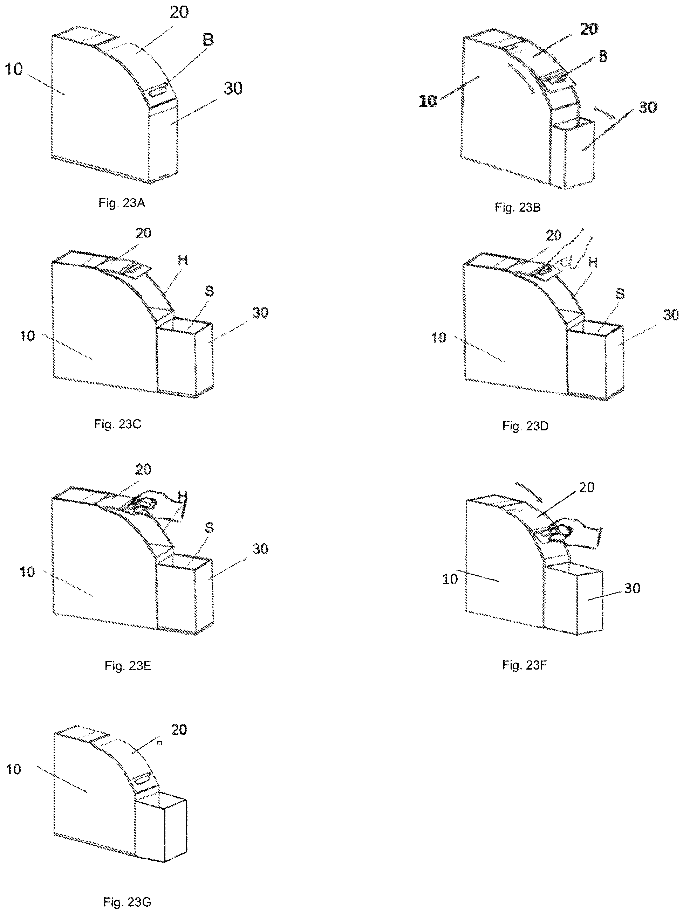

As shown in FIGURES 23A-23G, after the movable storage box 30 and the cover 20 are moved to the second open position and the first open position in the electric mode, respectively, the vehicle interior trim component is switched to the manual mode; the switch B on the cover 20 is manually pressed, and then the cover 20 is manually pulled back to the first closed position.

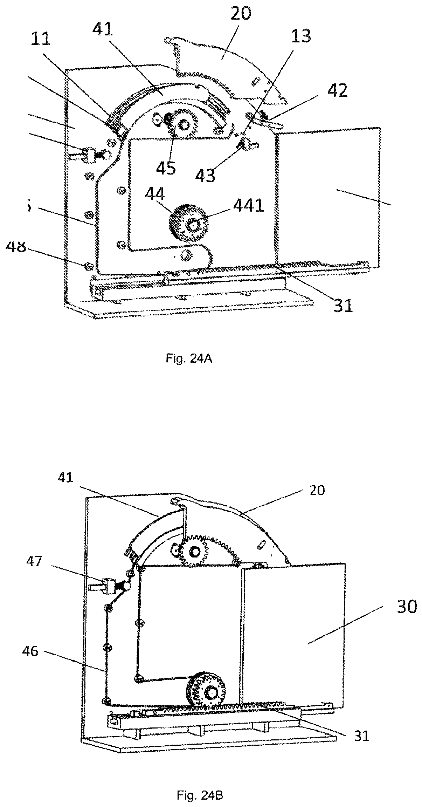

As shown in FIGURES 24A-24B, a rack 31 is provided at the bottom of the movable storage box 30, a first gear 441 is provided on the winder 44, and the rack 31 is engaged with the first gear 441. A motor 49 (not shown) is configured to drive the movable storage box 30 to move.

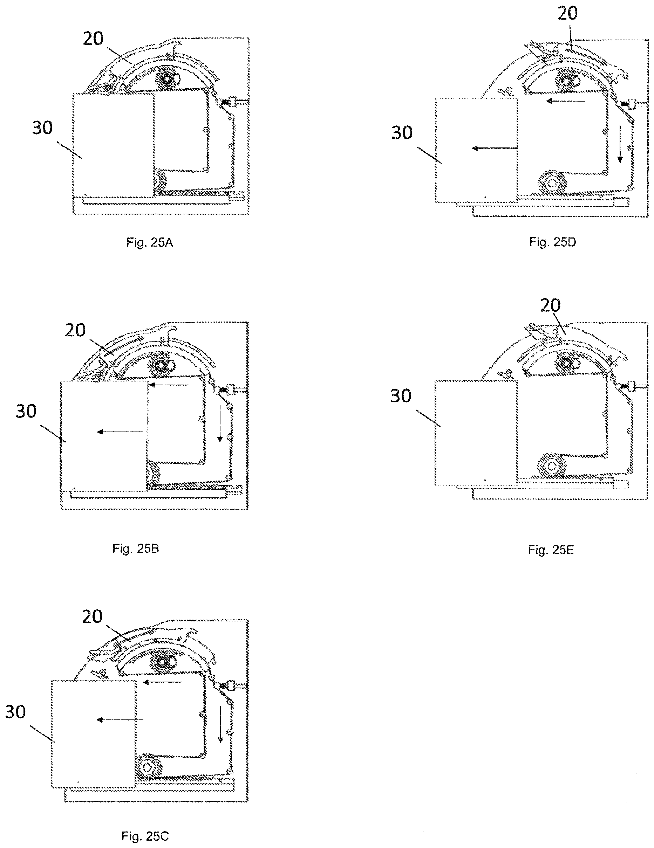

As shown in FIGURES 25A-25E, when the motor 49 drives the movable storage box 30 to move, the rack 31 on the movable storage box 30 also moves synchronously, which in turn drives the first gear 441 engaged with the rack 31 to rotate, and then drives the winder 44 coaxial with the first gear 441 to rotate, so as to drive the cable 46 to pull the slide 41 to move, and then drive the cover 20 connected to the slide 41 to move synchronously. Therefore, the cover 20 and the movable storage box 30 move synchronously, so that specific requirements can be met, and meanwhile, the vehicle interior trim component of the present invention features a simple structure and a low cost.

### Embodiment 3

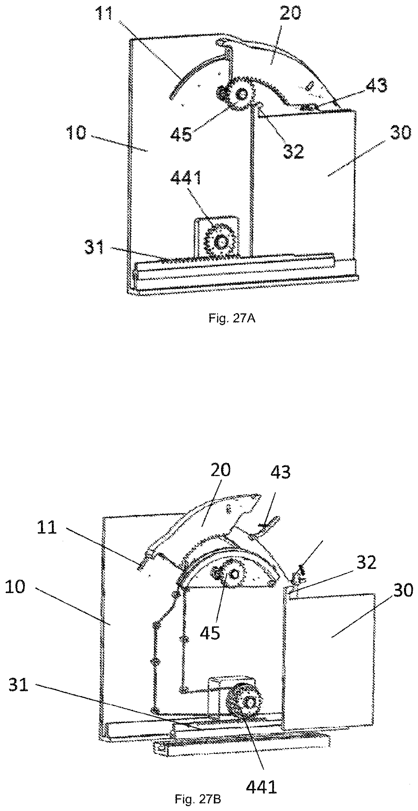

Compared with the vehicle interior trim component in Embodiment 2, the vehicle interior trim component in the present embodiment is not provided with the sliding mechanism of the slide 41, the cable 46 and the winder 44 and the design of the tension pulley 47 and the cable pulley 48, but with a push rod 32 on the movable storage box 30, forming another sliding mechanism together with the rack 31 and the first gear 441, as shown in FIGURES 27A-27B. The push rod 32 is a convex structure with an outer contour of a curved surface.

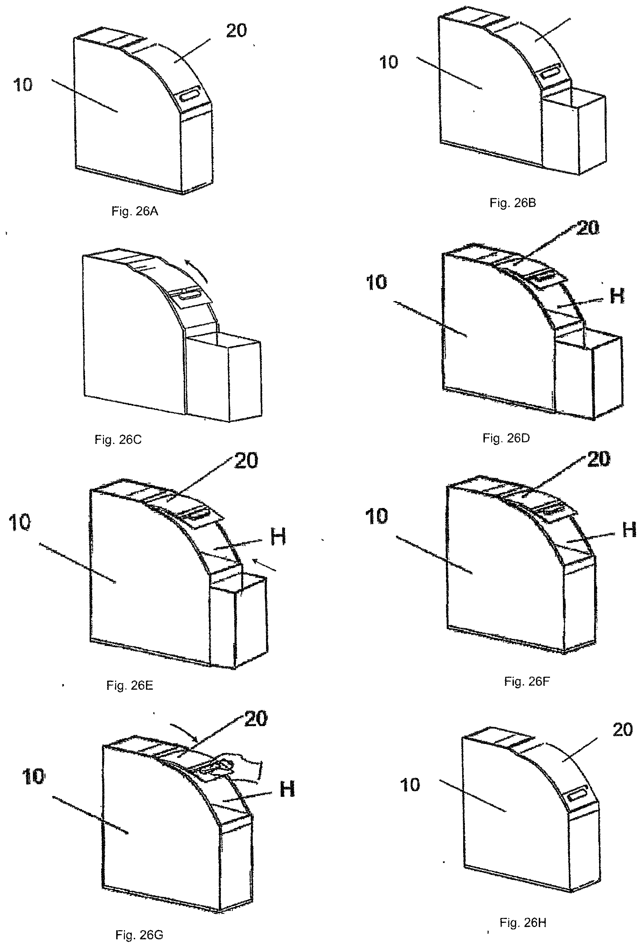

As shown in FIGURES 26A-26B, the cover 20 and the movable storage box 30 are in a first closed position and a second closed position, respectively. As the movable storage box 30 moves toward the first open position in the electric mode, the cover 20 remains in the first closed position, as shown in FIGURES 26C-26D, and the cover 20 does not move from the first closed position toward, and finally to, the first open position until the movable storage box 30 moves to the first open position. As shown in FIGURES 26E-26F, as the movable storage box 30 moves toward the first closed position in the electric mode, the cover 20 remains in the first open position until the movable storage box 30 moves to the first closed position. The cover 20 can be closed by manually pulling the cover 20 from the first open position back to the first closed position, as shown in FIGURES 26G-26H.

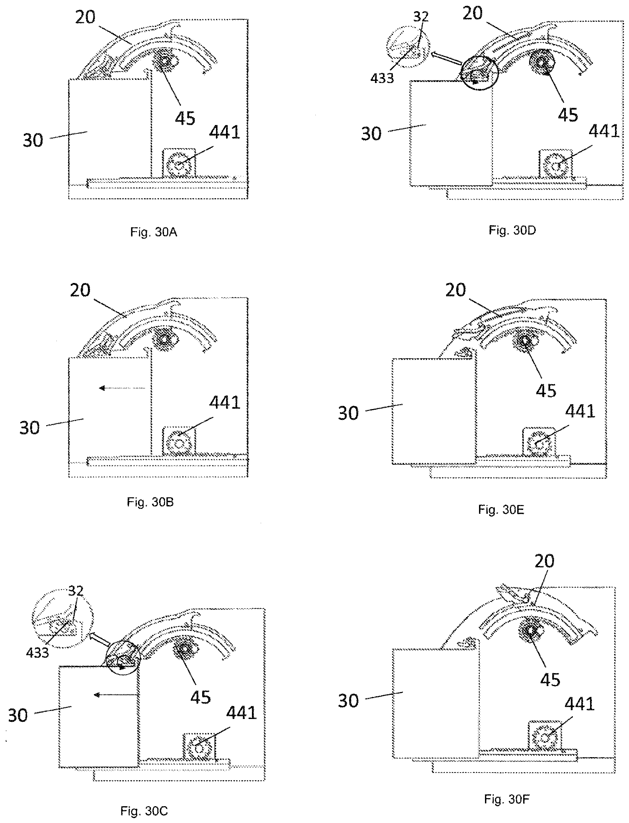

As shown in FIGURES 30A-30F, the push rod 32 is away from the cover lock 43 when the movable storage box 30 is in the second closed position. At this time, the cover 20 is connected with the cover lock 43 to fix the cover 20 in the first closed position. The cover 20 is released from the base 10 when the movable storage box 30 moves to the second open position.

Specifically, when the cover 20 moves from the first closed position toward the first open position, as shown in FIGURE 30B, the motor 49 drives the first gear 441 to rotate, thereby driving the rack 31 engaged with the first gear 441 to move, that is, driving the movable storage box 30 connected to the rack 31 to move. As shown in FIGURES 30C-30D, as the movable storage box 30 is opened, the push rod 32 gradually approaches the cover lock 43 until it contacts the eccentric structure 433 of the cover lock 43, so as to push the cover lock 43 to rotate clockwise, disengaging the locking hook 432 of the cover lock 43 from the locking tongue 231 of the cover 20, such that the cover 20 is unlocked and moves to the open position along the first sliding rail 11 under the action of the torsion spring 454, as shown in FIGURES 30E-30F.

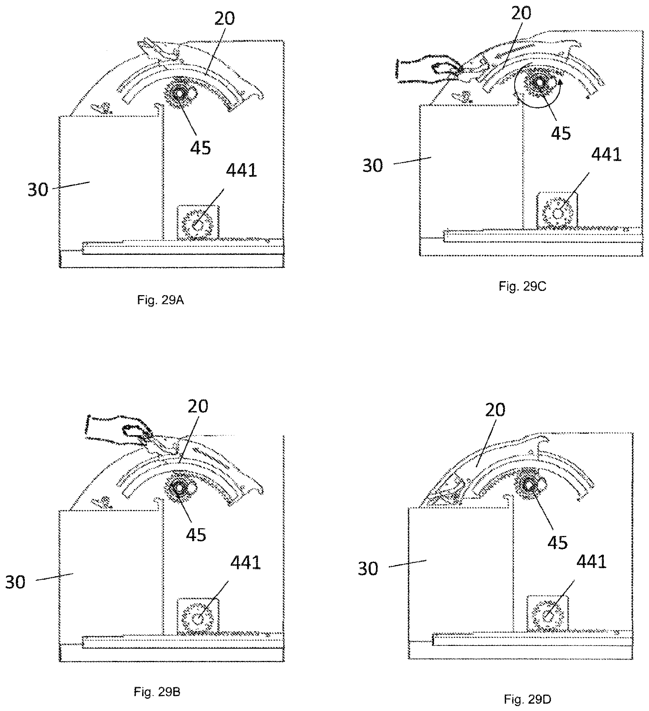

As shown in FIGURES 29A-29D, the movable storage box 30 is driven to return to the second closed position when the motor drives the first gear 441 to rotate reversely. As the push rod 32 of the movable storage box 30 gradually moves away from the cover lock 43, the force applied to the cover lock 43 by the push rod 32 against the second tension spring 434 gradually disappears; the cover lock 43 rotates counterclockwise under the tension of the tension spring 434 until the cover lock stops against the stop rod 13 on the base 10. At this time, it is only necessary to manually pull the cover 20 back to the first closed position until the cover 20 is again locked with the cover lock 43.

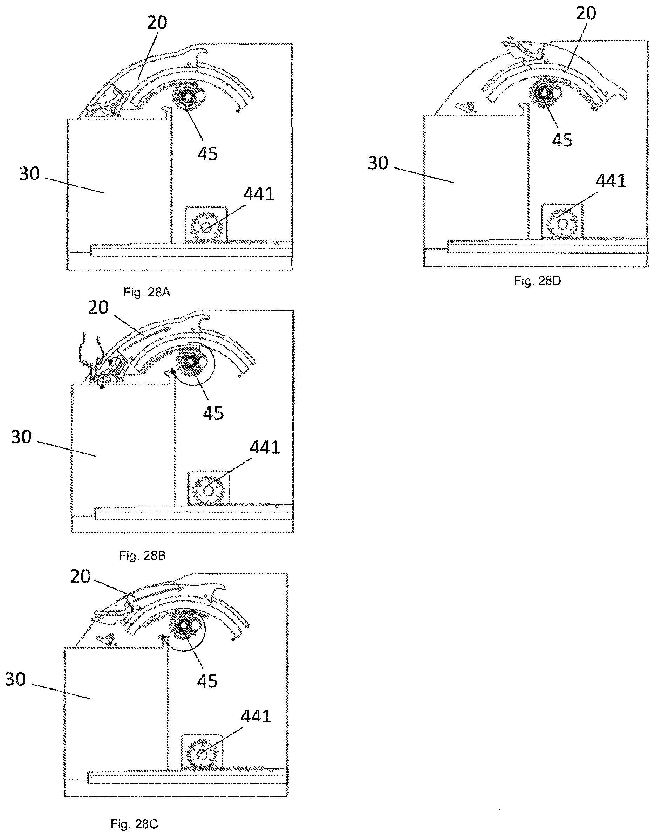

As shown in FIGURES 28A-28D, when the cover 20 and the movable storage box 30 are in the respective closed positions and the motor 49 fails, if passengers want to open the cover, they can press the manual switch B, such that the clutch lock 42 rotates counterclockwise and pushes the cover lock 43 to rotate counterclockwise, and the locking hook 432 of the cover lock 43 is disengaged from the locking tongue 231 of the cover 20, such that the cover 20 is released from the base 10. The cover 20 is unlocked and smoothly moved to the first open position under the action of the power-assisted gear set 45, and the movable storage box 30 remains in the second closed position.

The above description is only a preferred embodiment of the present invention, and is not intended to limit the scope of the present invention, and various modifications can be made to the above-described embodiment of the present invention. All simple and equivalent changes and modifications made according to the claims and the specification of the present application fall within the scope of the claims of the present invention. What has not been described in greater detail in the present invention is all conventional technique.

## Claims

1. A vehicle interior trim component comprising:
- a base having a storage compartment and a cover;
wherein the cover is configured to be movable relative to the base between a first closed position where the storage compartment is covered and a first open position where the storage compartment is exposed in both an electric mode and a manual mode.

2. The interior trim component of Claim 1 further comprising a slide driven by a motor and moving relative to the base between the first closed position and the first open position.

3. The interior trim component of Claim 2 wherein the cover is configured to move in the electric mode when the cover is connected with the slide, and the cover is configured to move in the manual mode when the cover is disconnected from the slide.

4. The interior trim component of Claim 3 further comprising a clutch lock for realizing the connection and disconnection of the cover with the slide.

5. The interior trim component of Claim 4 wherein the cover is provided with a switch, and the clutch lock is configured to realize the connection or disconnection of the cover with the slide in response to pressure applied to the switch.

6. The interior trim component of Claim 4 wherein the slide comprises a locking slot, and the cover comprises an unlocking slot; the cover is connected with the slide when a locking head of the clutch lock is positioned in the locking slot, and the cover is disconnected from the slide when the locking head of the clutch lock is positioned in the unlocking slot.

7. The interior trim component of Claim 6 wherein the clutch lock is disposed on the cover and rotated relative to the cover, such that the clutch lock moves from the locking slot into the unlocking slot or from the unlocking slot into the locking slot.

8. The interior trim component of Claim 6 or 7 wherein the clutch lock is connected with the cover by a first tension spring that acts on the clutch lock to retain the locking head of the clutch lock in the locking slot.

9. The interior trim component of Claim 6 wherein the locking slot is aligned with the unlocking slot when the cover and the slide are in a same position.

10. The interior trim component of Claim 5 further comprising a cover lock, wherein the cover is connected with the cover lock when the slide moves away from the first closed position such that the cover is secured in the first closed position.

11. The interior trim component of Claim 10 wherein the cover lock is configured to rotate in response to pressure applied to the switch when the cover is connected with the cover lock such that the cover lock is disconnected from the cover.

12. The interior trim component of Claim 10 wherein the cover lock is configured to connect with the cover when the slide is in the first closed position.

13. The interior trim component of Claim 10 wherein the cover lock is connected with the base by a second tension spring.

14. The interior trim component of Claim 13 wherein the base is provided with a stop rod configured to define a position of the cover lock under action of the second tension spring when the slide moves away from the cover lock.

15. The interior trim component of Claim 2 wherein both ends of the slide are connected with a cable wrapping around a winder.

16. The interior trim component of Claim 15 wherein the winder is connected with the motor to move the slide.

17. The interior trim component of Claim 15 further comprising a movable storage box connected with the motor, wherein movement of the storage box rotates the winder and thereby moves the slide.

18. A vehicle interior trim component comprising:
- a base having a storage compartment;
- a cover; and
- a movable storage box;
wherein the cover is configured to be movable relative to the base between a first closed position where the storage compartment is covered and a first open position where the storage compartment is exposed in both an electric mode and a manual mode; and
wherein the movable storage box is configured to move between a second closed position within the base and a second open position where the movable storage box protrudes from the base.

19. The interior trim component of Claim 18 wherein the movable storage box is powered by a motor.

20. The interior trim component of Claim 18 wherein the cover is secured to the base by a cover lock when the cover is in the first closed position.

21. The interior trim component of Claim 18 wherein the cover is released from the base when the movable storage box moves to the second open position.

22. The interior trim component of Claim 20 wherein the movable storage box comprises a push rod, and the push rod contacts and pushes the cover lock to rotate when the movable storage box moves toward the second open position.

23. The interior trim component of Claim 20 further comprising a clutch lock provided on the cover, wherein rotation of the clutch lock rotates the cover lock when the cover is in the first closed position to release the cover from the base.

24. The interior trim component of Claim 23 wherein the cover is provided with a switch; wherein the clutch lock is configured to rotate in response to pressure applied to the switch to release the cover from the base.

25. The interior trim component of Claim 18 wherein the cover moves from the first closed position toward the first open position in response to movement of the movable storage box from the second closed position toward the second open position.

26. The interior trim component of Claim 18 wherein the cover moves from the first open position toward the first closed position in response to movement of the movable storage box from the second open position toward the second closed position.

27. The interior trim component of Claim 18 wherein the cover is movable between the first closed position and a first open position when the movable storage box is in any position between the second closed position and the second open position.

28. The interior trim component of Claim 18 wherein the cover remains in the first open position when the movable storage box moves from the second open position toward the second closed position.

29. A vehicle interior component, comprising:
- a base configured to provide a storage compartment;
- a cover configured to move, relative to the base, between a first closed position where the storage compartment is covered and a first open position where an access to the storage compartment is provided; and
- a mechanism configured to drive the cover to move between the first closed position and the first open position;
wherein the cover is configured for an engaged state in which the cover is engaged with the mechanism and a disengaged state in which the cover is disengaged from the mechanism.

30. The vehicle interior component of Claim 29 wherein the mechanism comprises a motor configured to move the cover between the first closed position and the first open position when the cover is in the engaged state.

31. The vehicle interior component of Claim 29, further comprising a connector configured to connect the cover to the mechanism to provide the engaged state.

32. The vehicle interior component of Claim 31 wherein the connector comprises a slide.

33. The vehicle interior component of Claim 31 wherein the mechanism is configured to move the connector to move the cover between the first closed position and the first open position.

34. The vehicle interior component of Claim 31 further comprising an electrical cable configured to connect the connector with the mechanism.

35. The vehicle interior component of Claim 29 further comprising a clutch lock configured to disconnect the cover from the mechanism to provide the disengaged state.

36. The vehicle interior component of Claim 29 wherein the cover is configured to move between the first closed position and the first open position in response to an external force applied to the cover when the cover is in the disengaged state.

37. The vehicle interior component of Claim 36 wherein the external force comprises at least one of a force applied to the cover by a hand and a force applied to the cover by a torsion spring.

38. The vehicle interior component of Claim 29 further comprising a storage box configured to move, relative to the base, between a second closed position where the storage box is stored and a second open position where an access to the storage box is provided.

39. The vehicle interior component of Claim 38 wherein the cover is configured to move from the first closed position toward the first open position when the storage box moves from the second closed position toward the second open position.

40. The vehicle interior component of Claim 38 wherein the cover is configured to move from the first open position toward the first closed position when the storage box moves from the second open position toward the second closed position.

41. The vehicle interior component of Claim 38 wherein the cover is configured to move from the first closed position toward the first open position or from the first open position toward the first closed position when the storage box is in the second closed position.
